# EUROPÄISCHE PATENTSCHRIFT

(11) **EP 0 789 215 B1**
(45) Veröffentlichungstag und Bekanntmachung des Hinweises auf die Patenterteilung: **18.06.2003**
(21) Anmeldenummer: 96114373.2
(22) Anmeldetag: 09.09.1996
(51) Int. Cl.: F28D 20/02

(54) **Latentwärmespeicher**
Heat storage of latent heat type
Stockage de chaleur du type à chaleur latente

(30) Priorität: 12.09.1995 DE 19533646
(43) Veröffentlichungstag der Anmeldung: 13.08.1997
(73) Patentinhaber: Deutsches Zentrum für Luft- und Raumfahrt e.V., 53175 Bonn (DE)
(72) Erfinder: Lindner, Friedrich, Dr., 70771 Leinfelden-Echterdingen (DE); Tattermusch, Peter, 71155 Altdorf (DE)
(74) Vertreter: Hoeger, Stellrecht & Partner

(56) Entgegenhaltungen:
- WO-A-80/01509
- DE-A- 2 846 230
- DE-A- 3 114 270
- DE-A- 3 132 630
- DE-A- 3 345 061
- FOUDA, A.E. ET AL.: "SOLAR STORAGE SYSTEMS USING SALT HYDRATE LATENT HEAT AND DIRECT CONTACT HEAT EXCHANGE - I" SOLAR ENERGY, Bd. 25, Nr. 5, 1980, Seiten 437-444, XP002053726

## Beschreibung

Die Erfindung betrifft einen Latentwärmespeicher mit einem Behälter, welcher ein mit Salzhydrat als Latentwärmespeichermedium gefülltes Speichervolumen aufnimmt, mit einem Kreislauf für ein mit dem Latentwärmespeichermedium nicht mischbares, eine gegenüber dem Latentwärmespeichermedium geringere Dichte aufweisendes und im Speichervolumen offen durch das Latentwärmespeichermedium geführtes Wärmetauschermedium, welches Öl oder ein ölähnliches Medium umfaßt, und mit einem im Behälter innerhalb des Speichervolumens angeordneten und mit dem Kreislauf verbundenen sowie Austrittskanäle aufweisenden Verteilelement zum perlenähnlichen Verteilen des Wärmetauschermediums im Latentwärmespeichermedium, wobei das Verteilelement eine äußere, mit dem Latentwärmespeichermedium in Berührung stehende Hülle aufweist.

Bei den aus der DE 31 32 630 A1 bekannten derartigen Latentwärmespeichern ist das Verteilelement aus einer mit Schaumstoff umgebenen Rohrleitung ausgeführt, wobei das Öl durch den Schaumstoff hindurch in das Speichermedium gedrückt wird, was dazu führt, daß sich an einer Außenseite des Verteilelements und insbesondere an den Austrittskanälen für das Wärmetauschermedium im Laufe der Zeit Kristallansätze bilden, die während der Entladevorgänge gegen die Strömung des Wärmetauschermediums anwachsen und schließlich die Austrittskanäle verschließen.

Es wurde bereits versucht, die Strömungsgeschwindigkeit des durch die Austrittskanäle strömenden Wärmetauschermediums oder den Durchmesser der Austrittskanäle zu ändern. All dies konnte die Bildung eines Kristallansatzes und ein im Laufe der Zeit erfolgendes Zuwachsen der Austrittskanäle nicht verhindern.

Der Erfindung liegt daher die Aufgabe zugrunde, einen Latentwärmespeicher der gattungsgemäßen Art derart zu verbessern, daß im Bereich von Austrittsöffnungen für das Wärmetauschermedium am Verteilelement ein Kristallansatz vermieden wird.

Diese Aufgabe wird bei einem Latentwärmespeicher der eingangs beschriebenen Art erfindungsgemäß dadurch gelöst, daß die Hülle aus einem hochwärmedämmenden, vom Latentwärmespeichermedium nicht benetzbaren und ölresistenten Material aufweist.

Diese Lösung hat den großen Vorteil, daß einerseits durch die Wärmedämmung der Hülle und andererseits durch die Nichtbenetzbarkeit der Hülle die Bildung von Kristallansätzen an den das Latentwärmespeichermedium berührenden Wandflächen verhindert wird und somit auch im Bereich der Austrittsöffnungen und Austrittskanäle sich kein Kristallansatz bildet, der zu einem Zuwachsen derselben führen kann.

Da als Wärmetauschermedium vorzugsweise ölähnliche Materialien zum Einsatz kommen ist außerdem vorgesehen, daß das Material der Hülle ölresistent ist.

Als besonders zweckmäßiges Material für die Ausbildung der Hülle hat es sich erwiesen, wenn dieses ein Kunststoff ist.

Hinsichtlich der Wärmeleitfähigkeit des Materials der Hülle wurden bislang keine näheren Angaben gemacht. So sieht ein besonders vorteilhaftes Aus-Ausführungsbeispiel vor, wenn das
Material eine Wärmeleitfähigkeit λ von höchstens 0,5 Watt/m x K aufweist, da mit einer derartigen hohen Wärmedämmung nennenswert geringe Wandstärken der Hülle realisierbar sind, und trotzdem noch eine ausreichende Wärmedämmung vorliegt.

Besonders zweckmäßig ist es, wenn die Hülle so dimensioniert ist, daß ihre das Latentwärmespeichermedium kontaktierende Wand bei tiefster Temperatur des Wärmetauschermediums eine Temperatur aufweist, welche nahe dem Temperaturniveau des kontaktierten Latentwärmespeichermediums liegt. Damit ist eine Regel angegeben, gemäß welcher die Hülle allein aufgrund ihrer Wärmedämmung die Bildung von Kristallansätzen an den dem Latentwärmespeichermedium zugewandten Wandflächen dadurch verhindert, daß die Wandflächen auf im wesentlichen der gleichen Temperatur wie das Latentwärmespeichermedium liegen, so daß dieses nicht die Tendenz hat, an den Wandflächen der Hülle auszukristallisieren.

Hinsichtlich der Hülle wurden bislang keine näheren Angaben gemacht. So sieht ein vorteilhaftes Ausführungsbeispiel vor, daß die Hülle als Rohr ausgebildet ist.

Da eine derartige Hülle, insbesondere wenn sie aus erfindungsgemäß vorteilhaften Materialien hergestellt ist, in der Regel sehr labil ist, ist vorzugsweise vorgesehen, daß die Hülle durch ein Trägerelement stabilisiert ist.

Dieses Trägerelement könnte entweder so ausgebildet sein, daß es die Hülle auf einer Außenseite, das heißt einer dem Latentwärmespeichermedium zugewandten Seite umgreift oder angreift. Aus Gründen der Bildung von Kristallansätzen im Bereich des Trägerelements hat es sich als besonders vorteilhaft erwiesen, wenn die Hülle durch ein innerhalb derselben verlaufendes Trägerelement stabilisiert ist.

Dabei könnte im einfachsten Fall die Hülle unmittelbar auf dem Trägerelement aufliegen. Um jedoch ausreichend Raum zur Führung des Wärmetauschermediums zu haben, ist es besonders vorteilhaft, wenn die Hülle gegenüber dem Trägerelement mittels Stützelementen abgestützt ist, so daß insbesondere zwischen dem Trägerelement und der Hülle ein Raum zur Führung des Wärmetauschermediums zur Verfügung steht.

Um nun das Verteilerelement in dem Behälter fixieren zu können, ist vorzugsweise vorgesehen, daß das Trägerelement endseitig aus der Hülle herausgeführt ist.

Vorzugsweise ist das Verteilelement durch das Trägerelement am Behälter fixiert.

Das Trägerelement selbst kann grundsätzlich beliebig ausgebildet sein, sofern es der Hülle die ausreichende Stabilität verleiht. Eine besonders vorteilhafte Möglichkeit sieht vor, daß das Trägerelement als Rohr ausgebildet ist, so daß das Rohr die Möglichkeit bietet, entweder Wärmetauschermedium oder ein anderes Medium zu führen.

Beispielsweise kann das Trägerelement auch in der Hülle des Verteilelements als haarnadelförmig·gebogenes Rohr verlaufen.

Eine besonders vorteilhafte Lösung sieht vor, daß das Rohr Teil eines Aufschmelzsystems ist und daß in diesem ein Aufschmelzmedium geführt ist, welches dazu eingesetzt werden kann, das Verteilerelement vor einem Ladevorgang aufzuschmelzen, wobei das Aufschmelzen sich auf das Lösen von im Verteilerelement auskristallisiertem Latentwärmespeichermedium bezieht.

Hinsichtlich der Austrittskanäle des Verteilelements wurden bislang keine näheren Angaben gemacht. So sieht ein besonders vorteilhaftes Ausführungsbeispiels vor, daß das Verteilelement gegenüber der Horizontalen nach unten geneigte Austrittskanäle für das Wärmetauschermedium aufweist, wobei diese Austrittskanäle vorzugsweise bewirken, daß das Wärmetauschermedium mit einem entsprechend der Neigung des Austrittskanals gerichteten Strahl aus dem Verteilelement austritt und dann im Abstand von dem Verteilelement sich der Strahl in einzelne Perlen auflöst, die somit seitlich des Verteilelements beginnen im Latentwärmespeichermedium aufzusteigen.

Damit läßt sich durch diese Ausrichtung der Austrittskanäle ein optimaler Abstand der aufsteigenden Perlen von dem Verteilelement erreichen.

Um einen Kristallansatz zu verhindern, ist es besonders vorteilhaft, wenn die Austrittskanäle an ihren Austrittsöffnungen gerundete Kanten aufweisen, so daß insbesondere an der kritischen Stelle, an welcher eine Berührung zwischen Latentwärmespeichermedium und den Austrittsöffnungen erfolgt, die Tendenz zur Bildung von Kristallansatz verringert wird.

Eine besonders vorteilhafte Ausbildung sieht vor, daß die Austrittskanäle um einen Auslaßwinkel von größer 30° gegenüber der Horizontalen geneigt sind, um eine möglichst große "Wurfweite" für das ausströmende Wärmetauschermedium und die Perlenbildung zu erhalten.

Da es im Rahmen der erfindungsgemäßen Lösung besonders vorteilhaft ist, wenn das Wärmetauschermedium über ein möglichst großes Volumen verteilt in Form von Perlen durch das Speichervolumen aufsteigt, sind vorzugsweise zu gegenüberliegenden Seiten des Verteilelements gerichtete Auslaßkanäle vorgesehen.

Ferner ist es bei dem erfindungsgemäßen Verteilelement von Vorteil, wenn die dem Wärmetauschermedium zur Durchströmung zur Verfügung stehende Querschnittsfläche der Austrittskanäle ungefähr der freien, dem Wärmetauschermedium zur Durchströmung zur Verfügung stehenden Querschnittsfläche im Verteilelement entspricht, so daß das Wärmetauschermedium größenordnungsmäßig mit derselben Geschwindigkeit durch das Verteilerelement hindurch als auch durch die Auslaßkanäle ausströmt.

Um ferner zu verhindern, daß in die Austrittskanäle des Verteilerelements Latentwärmespeichermedium in nennenswertem Umfang eindringt und innerhalb des Verteilerelements zu Kristallansätzen führt, ist vorzugsweise im Kreislauf eine Rückschlagsicherung vorgesehen, welche bei Ausfall einer Umwälzpumpe des Kreislaufs sicherstellt, daß das Latentwärmespeichermedium das Wärmeträgermedium nicht in die Austrittskanäle hineindrückt und somit selbst in diese und in das Innere des Verteilelements eindringt.

Die Rückschlagsicherung ist vorzugsweise aus einem Material hergestellt oder mit einem Material beschichtet, welches gemäß den vorstehenden Forderungen auch als Material für die Hülle geeignet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen Längsschnitt durch ein erstes Ausführungsbeispiel eines erfindungsgemäßen Latentwärmespeichers;
- Fig. 2: einen Querschnitt durch das erste Ausführungsbeispiel des Latentwärmespeichers längs Linie 2-2 in Fig. 1;
- Fig. 3: eine ausschnittsweise Darstellung eines Teilbereichs eines Kristallisationselements;
- Fig. 4: einen Querschnitt durch ein Ausführungsbeispiel eines Verteilelements;
- Fig. 5: einen Längsschnitt ähnlich Fig. 1 durch ein zweites Ausführungsbeispiel;
- Fig. 6: einen Querschnitt ähnlich Fig. 2 durch das zweite Ausführungsbeispiel längs Linie 6-6 in Fig. 5;
- Fig. 7: einen Längsschnitt ähnlich Fig. 1 durch ein drittes Ausführungsbeispiel;
- Fig. 8: eine perspektivische Darstellung eines erfindungsgemäßen Verteilelements eines vierten Ausführungsbeispiels eines erfindungsgemäßen Latentwärmespeichers.

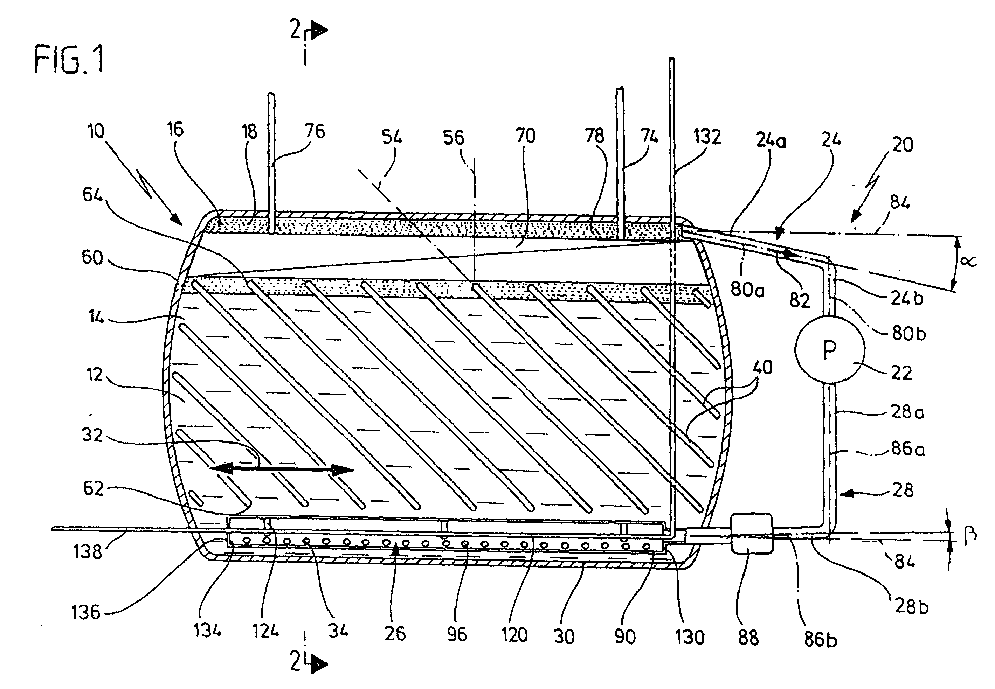

Ein erstes Ausführungsbeispiel eines erfindungsgemäßen Latentwärmespeichers, dargestellt in Fig. 1 bis 3, umfaßt einen als Ganzes mit 10 bezeichneten Behälter, dessen inneres Volumen zum Teil ein Speichervolumen 12 bildet, in welchem ein Latentwärmespeichermedium 14 angeordnet ist.

Über dem Speichervolumen 12 ist ein Sammelvolumen 16 zur Ausbildung einer mit 18 bezeichneten Schicht von Wärmetransportmedium vorgesehen.

Das Sammelvolumen 16 bildet Teil eines als Ganzes mit 20 bezeichneten Kreislaufs für das Wärmetransportmedium 18, wobei dieser Kreislauf 20 noch eine ausgehend von dem Sammelvolumen 16 zu einer Umwälzpumpe 22 führende Abfuhrleitung 24 für das Wärmetransportmedium 18 aufweist und eine von der Pumpe 22 zu einem Verteilelement 26 führende Zufuhrleitung 28. Das Verteilelement 26 ist in dem Speichervolumen 12 vorzugsweise nahe eines Behälterbodens 30 angeordnet und erstreckt sich vorzugsweise über eine Längsrichtung 32 des Behälters 10. Das Verteilelement weist dabei in Längsrichtung 32 aufeinanderfolgende Austrittsöffnungen 34 auf, aus welchen das Wärmetransportmedium 18 offen in Form eines Strahls in das Latentwärmespeichermedium 14 austritt und dort Perlen 36 bildet, wobei diese Perlen 36 durch das im Speichervolumen 12 stehende Latentwärmespeichermedium 14 hindurch in Richtung des Sammelvolumens aufgrund der geringeren Dichte des Wärmetransportmediums relativ zum Latentwärmespeichermedium aufsteigen. In dem Sammelvolumen 16 vereinigen sich dann die Perlen 36 zu der über dem Latentwärmespeichermedium 14 stehenden Schicht 18 aus Wärmetransportmedium, von welcher wiederum eine Abfuhr des Wärmetransportmediums über die Abfuhrleitung 24 erfolgt.

Um zu verhindern, daß sich beim Entladevorgang des Latentwärmespeichermediums 14 durch das durch diese hindurchperlende Wärmetransportmedium all zu viele freie Kristalle aus Latentwärmespeichermedium bilden und in Form eines Kristallmatsches nahe des Behälterbodens 30 absetzen, sind in dem Speichervolumen 12 Kristallisationselemente 40 angeordnet, welche Kristallisationsoberflächen 42 aufweisen, die Kristallisationsfixpunkte für die Auskristallisation des Latentwärmespeichermediums bilden, so daß auf den Kristallisationsoberflächen 42 Kristallschichten 44 aufwachsen.

Vorzugsweise sind die Kristallisationselemente 40 in Form von Gittern, beispielsweise mit jeweils parallel zueinander in einer ersten Richtung 46 verlaufenden Stäben 48 sowie quer zur ersten Richtung in einer zweiten Richtung 50 verlaufenden Stäben 52 ausgebildet, wobei jeder Stab eine als Kristallisationsoberfläche 42 wirkende Oberfläche aufweist.

Jedes gitterförmige Kristallisationselement erstreckt sich in einer durch die erste Richtung 46 und die zweite Richtung 50 aufgespannten Ebene 54, wobei die Ebenen 54, wie in Fig. 1 dargestellt, gegenüber einer Vertikalen 56 geneigt verlaufen.

Ferner sind vorzugsweise die Ebenen 54 in derartigen Abständen voneinander angeordnet, daß sich auch zwischen einander benachbarten Kristallisationselementen 40, das heißt beispielsweise den Stäben 48, 52 der jeweils benachbarten Kristallisationselemente 40, keine Kristallbrücken durch Kristallisation bilden und somit die Bildung von Kavernen, in welchen sich die Perlen 36 sammeln könnten und daher nicht weiter bis zur Schicht aus Wärmetransportmedium 18 aufsteigen würden, vermieden wird.

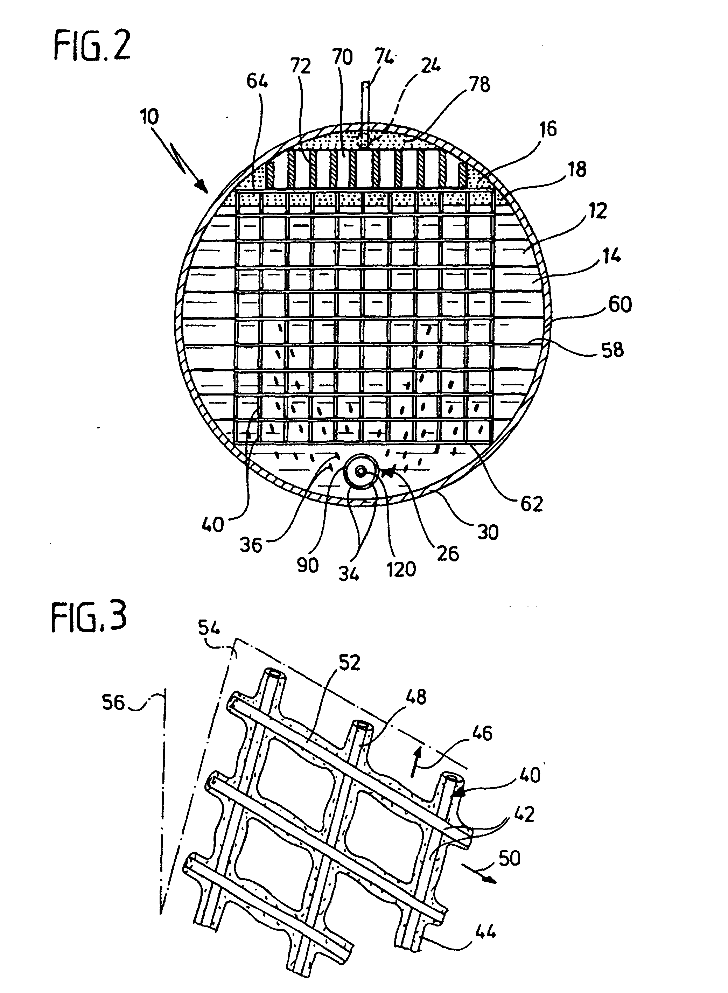

Die einzelnen Kristallisationselemente 40 sind, wie in Fig. 2 dargestellt, über Streben 58 an einer Behälterwand 60 abgestützt, so daß die sich auf den Kristallisationselementen 40 bildenden Kristallschichten 44 von den Kristallisationselementen 40 an den Positionen im Latentwärmespeichermedium 14 gehalten werden, an denen sie sich ausbilden.

Ferner erstrecken sich die Kristallisationselemente 40 vorzugsweise ausgehend von einer Unterkante 62, welche über dem Verteilelement 26 verläuft, bis zu einer Oberkante 64 durch das Speichervolumen 12 hindurch und vorzugsweise aus diesem heraus, so daß die Oberkante 64 im Sammelvolumen 16 liegt.

Vorzugsweise sind dabei alle Kristallisationselemente 40 im Bereich ihrer Oberkante 64 mit einem als Ganzes mit 70 bezeichneten und sich in dem Sammelvolumen 16 erstreckenden Wärmetauscher thermisch leitend verbunden, wobei der Wärmetauscher, wie in Fig. 2 dargestellt, aus einer Vielzahl nebeneinanderliegender Wärmetauscherplatten 72 aufgebaut ist, deren Inneres von einem Wärmetransportmedium durchströmt ist, welches über eine Zuleitung 74 zuführbar und eine Ableitung 76 abführbar ist.

Bei einer Variante ist es aber auch denkbar, daß die Kristallisationselemente 40 mit ihren Oberkanten 64 noch innerhalb des Speichervolumens 12 ohne Kontakt mit dem Wärmetauscher 70 enden.

Der Wärmetauscher 70 erstreckt sich dabei mit seinen Wärmetauscherplatten 72 vorzugsweise oberhalb des Speichervolumens 12 und innerhalb des Sammelvolumens 16, jedoch unterhalb eines vom Sammelvolumen 16 umschlossenen Abfuhrraums 78, in welchen die Abfuhrleitung 24 des Kreislaufs 20 mündet.

Dadurch, daß sämtliches, in den Abfuhrraum 78 gelangende Wärmetauschermedium zunächst durch den Wärmetauscher 70, das heißt die Wärmetauscherplatten 72 desselben, hindurchströmen muß, wirkt der Wärmetauscher 70 ebenfalls als Barriere für beim Entladevorgang nicht auskristallisiertes und vom Wärmetauschermedium in das Sammelvolumen 16 mitgerissenes Latentwärmespeichermedium, da dies, sofern es noch nicht auskristallisiert ist, an dem Wärmetauscher 70 als kältestem Element auskristallisiert und damit wiederum aufgrund seiner größeren Dichte die Möglichkeit hat, beim nächsten Ladezyklus durch die Schicht 18 des Wärmetauschermediums wieder zurück in das Speichervolumen 12 zu sinken. Andererseits wirkt der Wärmetauscher 70 als Barriere für vom Wärmetauschermedium mitgerissene bereits auskristallisierte Partikel aus Latentwärmespeichermedium, die aufgrund der vom Wärmetauscher 70 gebildeten Strömungsschikane ebenfalls nicht in den Abfuhrraum 78 eintreten.

Die thermische Verbindung zwischen dem Wärmetauscher 70 und den Kristallisationselementen 40 hat ferner den Vorteil, daß die Kristallisationselemente 40 selbst bereits beim Entladevorgang Wärme aus dem im Speichervolumen 12 gespeicherten Latentwärmespeichermedium 14 abführen und an den Wärmetauscher 70 abgeben, wodurch eine zusätzliche Unterstützung der Bildung der Kristallschichten 44 auf den Kristallisationsoberflächen führt.

Darüber hinaus ergibt sich beim Beladevorgang des Latentwärmespeichermediums 14 der Vorteil, daß die über den Wärmetauscher 70 zugeführte Wärme zusätzlich noch über die Kristallisationselemente 40 ebenfalls den Kristallschichten 44 zugeführt wird und somit das Aufschmelzen derselben unterstützt.

Ferner haben beim Beladevorgang die Perlen 36 die Möglichkeit, frei durch Zwischenräume zwischen den Kristallschichten 44 hindurchzuperlen und somit einerseits das Speichermedium 12 möglichst gleichmäßig zu erwärmen und andererseits auch zu einer möglichst gleichmäßigen Auflösung der Kristallschichten 44 beizutragen.

Um zu verhindern, daß sich in der Abfuhrleitung 24 vom Wärmetauschermedium mitgerissenes Latentwärmespeichermedium absetzt, insbesondere beim Entladevorgang auskristallisiert, und zu einer Querschnittsverengung, im Extremfall zu einem Querschnittsverschluß, führt, ist die Abfuhrleitung 24 des Kreislaufs 20 so ausgebildet, daß deren Längsachse 80a, b in Strömungsrichtung 82 gegenüber einer Horizontalen 84 nach unten geneigt verläuft, wobei in einem ersten Abschnitt 24a der Abfuhrleitung die Längsachse 80a in einem Winkel α gegenüber der Horizontalen 84 nach unten geneigt verläuft, während in einem Abschnitt 24b die Längsachse 80b der Abfuhrleitung 24 im wesentlichen parallel zur Vertikalen 56, das heißt im Winkel von 90° zur Horizontalen 84, verläuft. Ferner ist auch die Pumpe 22 derart ausgebildet, daß sämtliches, sich in der Umwälzpumpe 22 absetzendes Latentwärmespeichermedium von dem Wärmetauschermedium 18 in die Zufuhrleitung 28 gespült wird.

Auch die Zufuhrleitung 28 weist einen ersten Abschnitt 28a auf, dessen Längsachse 86a im wesentlichen parallel zur Vertikalen 56 verläuft und einen zweiten Abschnitt 28b, in welchem eine Längsachse 86b gegenüber der Horizontalen 84 schräg nach unten um einen Winkel β geneigt in den Behälter 10 hinein bis zum Verteilelement 26 verläuft.

Damit ist ebenfalls sichergestellt, daß sämtliches, sich in der Zufuhrleitung 28 absetzendes Latentwärmespeichermedium von dem Wärmetransportmedium in das Verteilelement 26 hineingespült und somit wiederum über die Austrittsöffnungen 34 dem Latentwärmespeichermedium 14 selbst zugeführt wird.

Vorzugsweise ist vor einer Einmündung der Zufuhrleitung 28 in das Verteilelement 26 ein Rückschlagventil 88 vorgesehen, welches beim Abschalten der Umwälzpumpe 22 oder einem Ausfall derselben verhindert, daß das die größere Dichte aufweisende Latentwärmespeichermedium durch die Austrittsöffnungen 34 in das Verteilelement 26 und sogar noch von diesem ausgehend in die Zufuhrleitung 28 unter Verdrängung des Wärmetauschermediums aus diesen eindringt. Durch das Rückschlagventil 88 wird vielmehr sichergestellt, daß bei einem Ausfall der Umwälzpumpe 22 das noch im Verteilelement 26 und dem Kreislauf 20 vorhandene Wärmetauschermedium ein derartiges Eindringen verhindert.

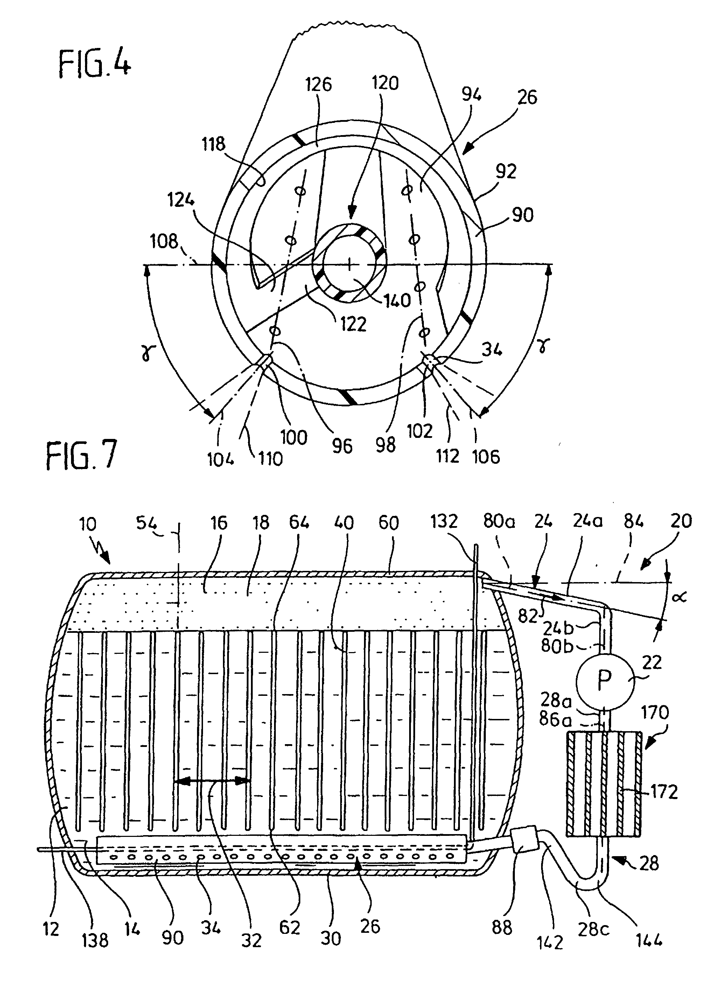

Das Verteilelement 26 ist, wie in Fig. 4 dargestellt, mit einem äußeren Rohr 90 versehen, welches aus einem vom Latentwärmespeichermedium nicht benetzbaren und gegenüber dem Wärmetauschermedium resistenten Kunststoff hergestellt ist, wobei im Fall von Salzhydrat als Latentwärmespeichermedium und Öl als Wärmetauschermedium als Material vorzugsweise Teflon (PTFE), Nylon oder PVC eingesetzt werden.

Das vorzugsweise eingesetzte Material für das äußere Rohr 90 hat dabei beispielsweise eine Wärmeleitfähigkeit λ von höchstens 0,5 Watt/m x k und somit einen Wärmedurchgangskoeffizienten k = λ/Dicke zwischen ungefähr 15 und ungefähr 500 w/m² x k, so daß eine äußere Wand 92 des äußeren Rohrs 90 selbst bei Zufuhr von vom Wärmetauscher 70 maximal gekühltem Wärmetauschermedium in einem Inneren 94 desselben eine Temperatur aufweist, welche im wesentlichen nahe dem Temperaturniveau des die äußere Wand 92 umgebenden Latentwärmespeichermediums 14 liegt. Damit ist das für das äußere Rohr 90 verwendete Material gleichzeitig thermisch isolierend, um zu verhindern, daß sich an der äußeren Wand 92 keine Kristalle des Latentwärmespeichermediums 14 bilden.

Ferner ist das äußere Rohr 90 vorzugsweise mit zwei Reihen 96, 98 von Austrittskanälen 100 bzw. 102 versehen, wobei sich Kanalachsen 104, 106 der Austrittskanäle 100 bzw. 102 in einem Winkel γ von ungefähr 45° gegenüber einer horizontalen Ebene 108 nach unten geneigt erstrecken und somit aus jedem der Austrittskanäle 100, 102 ein Strahl 110 bzw. 112 von Wärmetauschermedium austritt, der sich dann in dem Latentwärmespeichermedium 12 in die Perlen 36 auflöst, wobei die Strahlen 110 und 112 sich in entgegengesetzte Richtungen vom äußeren Rohr 90 weg ausbreiten.

Dadurch, daß sich nun an der äußeren Wand 92 des äußeren Rohrs keine Kristalle des Latentwärmespeichermediums bilden können, ist auch die Gefahr unterbunden, daß sich an den Austrittsöffnungen 34 der Austrittskanäle 100 bzw. 102 Kristalle des Latentwärmespeichermediums anzusetzen beginnen und somit die Austrittsöffnungen 34 mit zunehmender Zeit beim Entladevorgang des Latentwärmespeichers zusetzen.

Zur Stabilisierung des aufgrund der Verwendung der beispielsweise vorstehend genannten Kunststoffe labilen äußeren Rohrs 90 ist dieses über einen als ganzes mit 120 bezeichneten Träger stabilisiert, welcher sich vorzugsweise durch ein Inneres des äußeren Rohrs 90 hindurcherstreckt und als Rohr ausgebildet ist, das insbesondere koaxial zum äußeren Rohr 90 verläuft.

Das Trägerrohr 120 ist dabei vorzugsweise als tragendes Element für das äußere Rohr 90 vorgesehen, wobei sich das äußere Rohr 90 über Halter 122 an dem Trägerrohr 120 abstützt. Diese Halter 122 weisen beispielsweise eine radial vom Trägerrohr 120 abstehende Strebe 124 auf und einen an einer inneren Wand 118 des äußeren Rohrs 90 zumindest über einen Teilumfangsbereich anliegenden Trägerbügel 126. Vorzugsweise sind die Strebe 124 sowie der Trägerbügel 126 einstückig aus Flachmaterial ausgebildet und fest mit dem Trägerrohr 120 verbunden, wobei zur ungestörten Zugänglichkeit der Reihen 96, 98 der Austrittskanäle 100 bzw. 102 der Trägerbügel 126 an den oberhalb der Reihen 96 bzw. 98 verlaufenden Bereichen der inneren Wand 126 über einen Azimutwinkel von mehr als 200°, vorzugsweise ungefähr 250°, anliegt.

Eine besonders vorteilhafte Lösung sieht dabei vor, daß das Trägerrohr 120 endseitig des äußeren Rohrs 90 aus diesem herausgeführt ist, und zwar beispielsweise an einem ersten, mit der Zufuhrleitung 28 verbundenen Ende 130 eine Wand der Zufuhrleitung 28, vorzugsweise unmittelbar vor deren Übergang in das äußere Rohr 90, durchdringt, parallel zur Vertikalen 56 nach oben durch das Speichervolumen 12 und das Sammelvolumen 16 hindurchverläuft und aus dem Behälter 10 in Form einer ersten Leitung 132 austritt. Dabei kann die Leitung 132 als Auftauleitung im Speichervolumen selbst dienen, wenn dieses sich nach längerer Standzeit verfestigt haben sollte.

Ferner durchdringt das Trägerrohr 120 an einem dem Ende 130 gegenüberliegenden Ende 134 des äußeren Rohrs 90 einen Abschlußdeckel 136 desselben und durchdringt in Form einer zweiten Leitung 138 ebenfalls die Behälterwand 60 des Behälters.

Die erste und die zweite Leitung 132 bzw. 134 dienen zur Zuoder Ableitung eines warmen Aufschmelzmediums, welches somit ein Inneres 140 des Trägerrohrs 120 durchströmt und somit in der Lage ist, beispielsweise im Fall von in das Innere 94 des äußeren Rohrs 90 eingedrungenem und auskristallisiertem Latentwärmespeichermedium, dieses aufzuschmelzen oder aufzutauen.

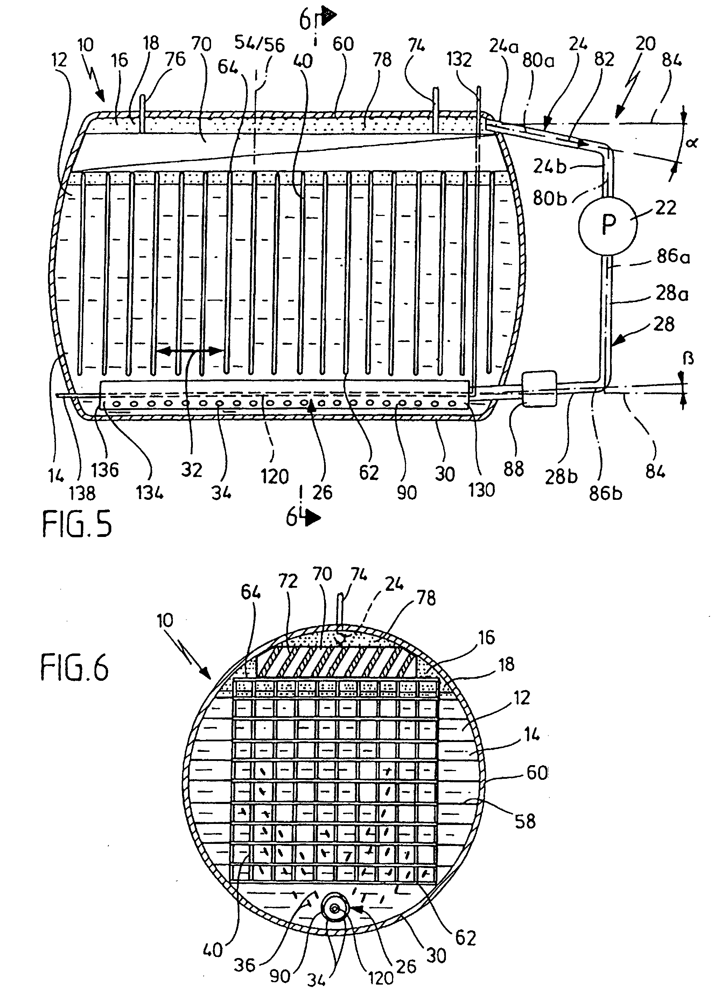

Bei einem zweiten Ausführungsbeispiel eines erfindungsgemäßen Latentwärmespeichers, dargestellt in den Figuren 5 und 6, stehen im Gegensatz zum ersten Ausführungsbeispiel die Ebenen 54, in welchen sich die Kristallisationselemente 40 erstrecken, im wesentlichen parallel zur Vertikalen, so daß die Perlen 36 durch die Zwischenräume zwischen den Kristallisationselementen 40 sich in Richtung des Sammelvolumens 16 bewegen.

Ferner stehen im Gegensatz zum ersten Ausführungsbeispiel bei dem zweiten Ausführungsbeispiel, wie in Fig. 6 dargestellt, die Wärmetauscherplatten 72 schräg zur Vertikalen 56 und bilden daher eine noch effektivere Sperre für durch das Wärmetauschermedium mitgerissenes Latentwärmespeichermedium, welches insbesondere dann, wenn es an den Wärmetauscherplatten 72 auskristallisiert, durch die Zwischenräume zwischen den Wärmetauscherplatten 72 wieder zurück in das Speichervolumen 12 fällt.

Im übrigen ist das zweite Ausführungsbeispiel in gleicher Weise ausgebildet wie das erste Ausführungsbeispiel, so daß auf die Ausführungen hierzu vollinhaltlich Bezug genommen werden kann.

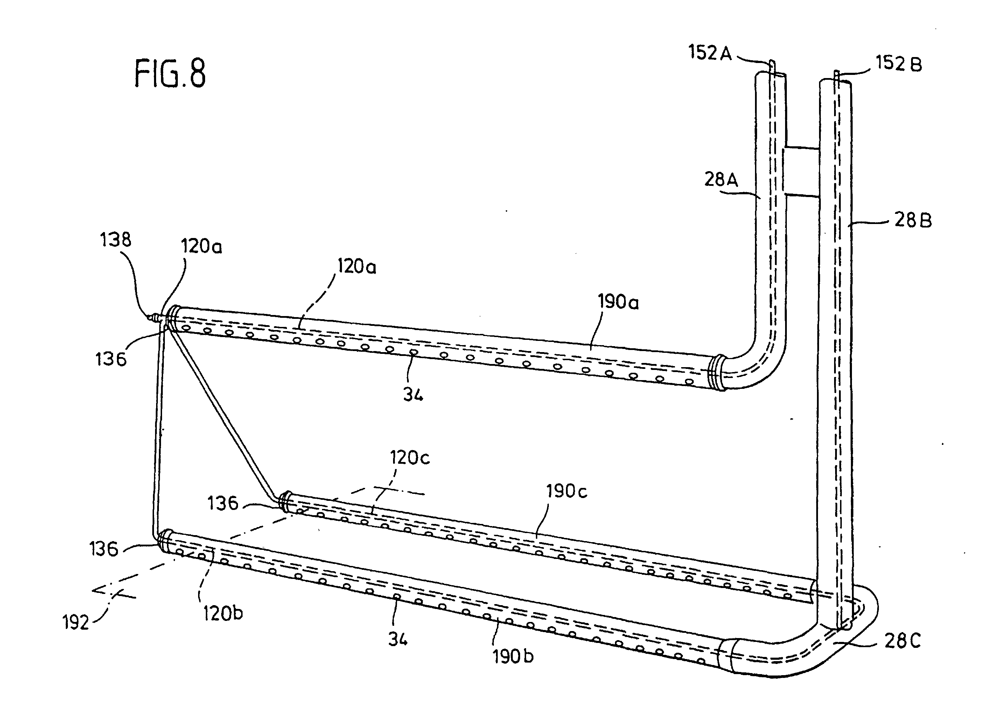

Bei einem dritten Ausführungsbeispiel, dargestellt in Fig. 7, stehen die Kristallisationselemente 40 in gleicher Weise wie beim zweiten Ausführungsbeispiel parallel zur Vertikalen 56 ausgerichtet.

Im Gegensatz zum ersten und zweiten Ausführungsbeispiel ist der Wärmetauscher 70 nicht in dem Sammelvolumen 16 angeordnet, sondern als separater Wärmetauscher 170 in die Zufuhrleitung 28 eingebaut, wobei in diesem separaten Wärmetauscher 170 vorzugsweise intern angeordnete Wärmetauscherplatten 172 parallel zueinander und ebenfalls vorzugsweise parallel zur Vertikalen 56 verlaufen, so daß sich absetzendes Latentwärmetauschermedium zwangsläufig über die Zufuhrleitung 28 in das Verteilelement 26 und von diesem in das Latentwärmespeichermedium zurückgeführt wird.

Darüber hinaus ist, wie beispielsweise am Abschnitt 28c der Zufuhrleitung 28 exemplarisch dargestellt, in dem Kreislauf 20 eine siphonartige Führung der Zufuhrleitung 28 vorgesehen, welche aufgrund der Bauhöhe des Wärmetauschers 170 erforderlich ist. Diese siphonartige Leitungsführung hat zur Folge, daß sich vor einer Einmündung der Zufuhrleitung 28 in das Verteilelement 26 eine tiefste Stelle 144 in der Zufuhrleitung 28 bildet, in welcher sich vom Wärmetauschermedium mitgerissenes Latentwärmespeichermedium, insbesondere beim Entladevorgang, absetzt. Um zu verhindern, daß das sich in der tiefsten Stelle 140 absetzende Latentwärmespeichermedium eine dauerhafte Querschnittsverengung an dieser Stelle in der Zufuhrleitung 28 bewirkt, ist die Zufuhrleitung 28 beginnend mit der tiefsten Stelle und über ihren gesamten, in Strömungsrichtung 82 und gegenüber der Horizontalen 84 ansteigenden Abschnitt 142 im Querschnitt verengt, so daß durch die Verengung des Querschnitts eine Erhöhung der Strömungsgeschwindigkeit des Wärmetauschermediums erfolgt und das Wärmetauschermedium aufgrund seiner erhöhten Geschwindigkeit das sich an der tiefsten Stelle 140 absetzende Latentwärmespeichermedium mitreißt und in das Verteilerelement 26 fördert.

Die Querschnittsverengung ist vorzugsweise so ausgeführt, daß in dieser die Strömungsgeschwindigkeit des Wärmetauschermediums um einen Faktor von ungefähr 1,2 oder größer erhöht wird. Dieser Faktor hängt von der zu überwindenden Steigung und der dafür notwendigen Strömungsgeschwindigkeit ab.

Hinsichtlich der übrigen Merkmale ist das dritte Ausführungsbeispiel in gleicher Weise ausgebildet wie die voranstehenden Ausführungsbeispiele, so daß hinsichtlich der Beschreibung dieser Merkmale, die ebenfalls dieselben Bezugszeichen tragen, auf die Ausführungen zu den ersten Ausführungsbeispielen vollinhaltlich Bezug genommen wird.

Bei einem vierten Ausführungsbeispiel eines erfindungsgemäßen Latentwärmespeichers ist, wie in Fig. 8 dargestellt, das Verteilerelement nicht durch ein einziges äußeres Rohr 90 gebildet, sondern durch drei parallel zueinander verlaufende äußere Rohre 190a, 190b und 190c, welche ebenfalls von Trägerrohren 120a, 120b und 120c durchsetzt sind.

Vorzugsweise werden alle Trägerrohre 120a, 120b, 120c nach Durchdringen der Verschlußdeckel 136 der äußeren Rohre 190a, 190b, 190c zu der einen zweiten Leitung 138 zusammengeführt, welche die Behälterwand 60 durchdringend aus dem Behälter 10 austritt.

Dabei dient die Zusammenführung der Trägerrohre 120a, 120b, 120c zur gemeinsamen zweiten Leitung 138 ebenfalls zur Abstützung der Trägerrohre 120a, b, c und somit auch der in der bereits beschriebenen Art und Weise an diesen gelagerten äußeren Rohren 190a, 190b und 190c relativ zueinander.

Um eine besonders effiziente Verteilung des Wärmetauschermediums in dem Speichervolumen zu erreichen, liegen die beiden äußeren Rohre 190b und 190c in einer unteren Ebene 192 im Abstand voneinander, während das äußere Rohr 190a mittig zwischen diesen, jedoch oberhalb der Ebene 192 parallel zu den äußeren Rohren 190b und 190c verläuft.

Darüber hinaus verläuft die Zufuhrleitung 28 zweigeteilt, nämlich als Zufuhrleitung 28A und 28B einmal zu dem äußeren Rohr 190a und ein andermal über eine Verzweigung 28C zu den beiden äußeren Rohren 190b und 190c, wobei zusätzlich die erste Leitung 152 ebenfalls zweigeteilt, nämlich als Leitung 152A und 152B durch die Zufuhrleitungen 28A bzw. 28B hindurch und vorzugsweise koaxial zu denselben verläuft.

Vorzugsweise sind die Zufuhrleitungen 28A und 28B, welche als Steigleitungen durch das Speichervolumen 12 verlaufen, als Metallrohre, vorzugsweise Edelstahlrohre ausgebildet und mit PTFE-Bändern umwickelt, um die Kristallisation von Latentwärmespeichermedium an diesen zu verhindern oder zumindest zu reduzieren.

Bei einer Variante des vierten Ausführungsbeispiels ist vorgesehen, daß die Trägerrohre 120b und 120c in das Trägerrohr 120a münden, welches dann mit der Leitung 152A eine Rücklaufleitung bildet, während die Leitung 152B die Vorlaufleitung darstellt, oder umgekehrt.

## Patentansprüche

1. Latentwärmespeicher mit einem Behälter, welcher ein mit Salzhydrat als Latentwärmespeichermedium gefülltes Speichervolumen aufnimmt, mit einem Kreislauf für ein mit dem Latentwärmespeichermedium nicht mischbares, eine gegenüber dem Latentwärmespeichermedium geringere Dichte aufweisendes und im Speichervolumen offen durch das Latentwärmespeichermedium geführtes Wärmetauschermedium, welches Öl oder ein ölähnliches Medium umfaßt, und mit einem im Behälter innerhalb des Speichervolumens angeordneten und mit dem Kreislauf verbundenen sowie Austrittskanäle aufweisenden Verteilelement zum perlenähnlichen Verteilen des Wärmetauschermediums im Latentwärmespeichermedium, wobei das Verteilelement eine äußere, mit dem Latentwärmespeichermedium in Berührung stehende Hülle aufweist,
**dadurch gekennzeichnet, daß** die Hülle (90) aus einem hochwärmedämmenden, vom Latentwärmespeichermedium (14) nicht benetzbaren Material ist.

2. Latentwärmespeicher nach Anspruch 1, **dadurch gekennzeichnet, daß** das Material ein Kunststoff ist.

3. Latentwärmespeicher nach einem der voranstehenden Ansprüche, **dadurch gekennzeichnet, daß** das Material eine Wärmeleitfähigkeit λ von höchstens 0,5 Watt/m x K aufweist.

4. Latentwärmespeicher nach einem der voranstehenden Ansprüche, **dadurch gekennzeichnet, daß** die Hülle (90) so dimensioniert ist, daß ihre das Latentwärmespeichermedium (14) kontaktierende Wand (92) bei tiefster Temperatur des Wärmetauschermediums eine Temperatur aufweist, welche nahe dem Temperaturniveau des kontaktierten Latentwärmespeichermediums (14) liegt.

5. Latentwärmespeicher nach einem der voranstehenden Ansprüche, **dadurch gekennzeichnet, daß** die Hülle als Rohr (90) ausgebildet ist.

6. Latentwärmespeicher nach einem der voranstehenden Ansprüche, **dadurch gekennzeichnet, daß** die Hülle (90) durch ein Trägerelement (120) stabilisiert ist.

7. Latentwärmespeicher nach Anspruch 6, **dadurch gekennzeichnet, daß** die Hülle (90) durch ein innerhalb derselben verlaufendes Trägerelement (120) stabilisiert ist.

8. Latentwärmespeicher nach Anspruch 7, **dadurch gekennzeichnet, daß** die Hülle (90) gegenüber dem Trägerelement (120) mittels Stützelementen (122) abgestützt ist.

9. Latentwärmespeicher nach Anspruch 7 oder 8, **dadurch gekennzeichnet, daß** zwischen dem Trägerelement (120) und der Hülle (90) ein Raum (94) zur Führung des Wärmetauschermediums zur Verfügung steht.

10. Latentwärmespeicher nach einem der Ansprüche 7 bis 9, **dadurch gekennzeichnet, daß** das Trägerelement (120) endseitig aus der Hülle (90) herausgeführt ist.

11. Latentwärmespeicher nach einem der Ansprüche 6 bis 10, **dadurch gekennzeichnet, daß** das Verteilelement (26) durch das Trägerelement (120) am Behälter (10) fixiert ist.

12. Latentwärmespeicher nach einem der Ansprüche 7 bis 11, **dadurch gekennzeichnet, daß** das Trägerelement ein Rohr (120) umfaßt.

13. Latentwärmespeicher nach Anspruch 12, **dadurch gekennzeichnet, daß** das als Trägerelement ausgebildete Rohr (120) Teil eines Aufschmelzsystems ist.

14. Latentwärmespeicher nach einem der voranstehenden Ansprüche, **dadurch gekennzeichnet, daß** das Verteilelement (26) gegenüber der Horizontalen (108) nach unten geneigte Austrittskanäle (100, 102) für das Wärmetauschermedium aufweist.

15. Latentwärmespeicher nach einem der voranstehenden Ansprüche, **dadurch gekennzeichnet, daß** die Austrittskanäle (100, 102) an ihren Austrittsöffnungen (34) gerundete Kanten aufweisen.

16. Latentwärmespeicher nach einem der voranstehenden Ansprüche, **dadurch gekennzeichnet, daß** die dem Wärmetauschermedium zur Durchströmung zur Verfügung stehende Querschnittsfläche der Austrittskanäle (100, 102) ungefähr der freien, dem Wärmetauschermedium zur Durchströmung zur Verfügung stehenden Querschnittsfläche im Verteilelement (26) entspricht.

17. Latentwärmespeicher nach einem der voranstehenden Ansprüche, **dadurch gekennzeichnet, daß** in dem Kreislauf (20) eine Rückschlagsicherung (88) vorgesehen ist.

## Claims

1. Latent heat storage means with a container, which contains a storage compartment filled with salt hydrate as latent heat storage medium, with a circuit for a heat exchanger medium, which is not miscible with the latent heat storage medium, has a lower density than the latent heat storage medium and is directed freely through the latent heat storage medium in the storage compartment, said heat exchanger medium comprising oil or an oil-like medium, and with a distributor element, which is disposed inside the storage compartment in the container and is connected to the circuit and also has outlet ducts, for drop-like distribution of the heat exchanger medium in the latent heat storage medium, wherein the distributor element has an outer casing in contact with the latent heat storage medium, **characterised in that** the casing (90) is made of a highly heat-insulating material that is not wettable by the latent heat storage medium (14).

2. Latent heat storage means according to Claim 1, **characterised in that** the material is a plastic.

3. Latent heat storage means according to one of the preceding claims, **characterised in that** the material has a thermal conductivity λ of 0.5 watt/m x K at maximum.

4. Latent heat storage means according to one of the preceding claims, **characterised in that** the casing (90) is dimensioned such that, at the lowest temperature of the heat exchanger medium, its wall (92) touching the latent heat storage medium (14) has a temperature close to the temperature level of the touching latent heat storage medium (14).

5. Latent heat storage means according to one of the preceding claims, **characterised in that** the casing is in the form of a tube (90).

6. Latent heat storage means according to one of the preceding claims, **characterised in that** the casing (90) is stabilised by a carrier element (120).

7. Latent heat storage means according to Claim 6, **characterised in that** the casing (90) is stabilised by a carrier element (120) running inside it.

8. Latent heat storage means according to Claim 7, **characterised in that** the casing (90) is supported in relation to the carrier element (120) by means of support elements (122).

9. Latent heat storage means according to Claim 7 or 8, **characterised in that** between the carrier element (120) and the casing (90) a space (94) is available for directing the heat exchanger medium.

10. Latent heat storage means according to one of Claims 7 to 9, **characterised in that** the carrier element (120) is directed out of the casing (90) at the end.

11. Latent heat storage means according to one of Claims 6 to 10, **characterised in that** the distributor element (26) is fixed to the container (10) by the carrier element (120).

12. Latent heat storage means according to one of Claims 7 to 11, **characterised in that** the carrier element comprises a tube (120).

13. Latent heat storage means according to Claim 12, **characterised in that** the tube (120) constructed as carrier element is part of a melting system.

14. Latent heat storage means according to one of the preceding claims, **characterised in that** the distributor element (26) has outlet ducts (100, 102) that are inclined downwards relative to the horizontal (108) for the heat exchanger medium.

15. Latent heat storage means according to one of the preceding claims, **characterised in that** the outlet ducts (100, 102) have rounded edges at their outlet openings (34).

16. Latent heat storage means according to one of the preceding claims, **characterised in that** cross-sectional area of the outlet duct (100, 102) available to the heat exchanger medium for flow corresponds approximately to the free cross-sectional area in the distributor element (26) available to the heat exchanger medium for flow.

17. Latent heat storage means according to one of the preceding claims, **characterised in that** a safety valve (88) is provided in the circuit (20).

## Revendications

1. Stockage de chaleur du type à chaleur latente doté d'un réservoir, lequel recueille un volume de stockage rempli avec un sel hydraté en tant que milieu de stockage de chaleur du type à chaleur latente, doté d'un circuit pour un milieu échangeur thermique non miscible avec le milieu de stockage de chaleur du type à chaleur latente, présentant une densité réduite par rapport au milieu de stockage de chaleur du type à chaleur latente et conduit en cycle ouvert dans le volume de stockage à travers le milieu de stockage de chaleur du type à chaleur latente, milieu échangeur thermique qui comprend de l'huile ou un milieu semblable à de l'huile et doté d'un élément de distribution disposé dans le réservoir à l'intérieur du volume de stockage, relié au circuit et présentant des canaux de sortie permettant une distribution de type perlant du milieu échangeur thermique dans le milieu de stockage de chaleur du type à chaleur latente, dans lequel l'élément de distribution présente une enveloppe extérieure en contact avec le milieu de stockage de chaleur du type à chaleur latente, **caractérisé en ce que** l'enveloppe (90) est constituée d'un matériau d'isolation thermique à haut niveau et non mouillable par le milieu de stockage de chaleur du type à chaleur latente (14).

2. Stockage de chaleur du type à chaleur latente selon la revendication 1 **caractérisé en ce que** le matériau est une matière synthétique.

3. Stockage de chaleur du type à chaleur latente selon l'une quelconque des revendications précédentes, **caractérisé en ce que** le matériau présente une conductivité thermique λ au maximum de 0,5 Watt/m x K.

4. Stockage de chaleur du type à chaleur latente selon l'une quelconque des revendications précédentes, **caractérisé en ce que** l'enveloppe (90) est dimensionnée de telle façon que sa paroi (92) en contact avec le milieu de stockage de chaleur du type à chaleur latente (14) présente, lorsque la température du milieu échangeur thermique est au plus bas niveau, une température proche du niveau de température du milieu de stockage de chaleur du type à chaleur latente (14) avec lequel elle est en contact.

5. Stockage de chaleur du type à chaleur latente selon l'une quelconque des revendications précédentes, **caractérisé en ce que** l'enveloppe (90) est de forme tubulaire.

6. Stockage de chaleur du type à chaleur latente selon l'une quelconque des revendications précédentes, **caractérisé en ce que** l'enveloppe (90) est stabilisée par un élément porteur (120).

7. Stockage de chaleur du type à chaleur latente selon la revendication 6 **caractérisé en ce que** l'enveloppe (90) est stabilisée par un élément porteur (120) passant à l'intérieur de celle-ci.

8. Stockage de chaleur du type à chaleur latente selon la revendication 7 **caractérisé en ce que** l'enveloppe (90) est appuyée contre l'élément porteur (120) au moyen d'éléments de support (122).

9. Stockage de chaleur du type à chaleur latente selon la revendication 7 ou 8 **caractérisé en ce que** l'on dispose, entre l'élément porteur (120) et l'enveloppe (90), d'un espace (94) permettant de conduire le milieu échangeur thermique.

10. Stockage de chaleur du type à chaleur latente selon l'une quelconque des revendications 7 à 9 **caractérisé en ce que** l'élément porteur (120) sort de l'enveloppe (90) à son extrémité.

11. Stockage de chaleur du type à chaleur latente selon l'une quelconque des revendications 6 à 10 **caractérisé en ce que** l'élément de distribution (26) est fixé au réservoir (10) par l'élément porteur (120).

12. Stockage de chaleur du type à chaleur latente selon l'une quelconque des revendications 7 à 11 **caractérisé en ce que** l'élément porteur comporte un tuyau(120).

13. Stockage de chaleur du type à chaleur latente selon la revendication 12 **caractérisé en ce que** le tuyau (120) servant d'élément porteur fait partie d'un système de fusion.

14. Stockage de chaleur du type à chaleur latente selon l'une quelconque des revendications précédentes, **caractérisé en ce que** l'élément de distribution (26) présente des canaux de sortie (100, 102), inclinés vers le bas par rapport à l'horizontale (108), destinés au milieu échangeur thermique.

15. Stockage de chaleur du type à chaleur latente selon l'une quelconque des revendications précédentes, **caractérisé en ce que** les canaux de sortie (100, 102) présentent des arêtes arrondies au niveau de leurs orifices de sortie (34).

16. Stockage de chaleur du type à chaleur latente selon l'une quelconque des revendications précédentes, **caractérisé en ce que** l'aire de la section des canaux de sortie (100, 102) dont dispose le milieu échangeur thermique pour son écoulement correspond à peu près à l'aire de la section libre dans l'élément de distribution (26) dont dispose le milieu échangeur thermique pour son écoulement.

17. Stockage de chaleur du type à chaleur latente selon l'une quelconque des revendications précédentes, **caractérisé en ce qu'**un dispositif anti-retour (88) est prévu dans le circuit (20).
